# EUROPÄISCHE PATENTSCHRIFT

(11) **EP 1 630 181 B1**
(45) Veröffentlichungstag und Bekanntmachung des Hinweises auf die Patenterteilung: **07.11.2012**
(21) Anmeldenummer: 05015108.3
(22) Anmeldetag: 12.07.2005
(51) Int. Cl.: C08F 220/58, E21B 33/138

(54) **Thermostabiles, wasserlösliches, bei hohen Temperaturen vernetzbares Polymer**
Thermostable, watersoluble at high temperatures curable Polymer
Polymère thermostable soluble à l'eau et réticulable à haute températures

(30) Priorität: 22.07.2004 DE 102004035515
(43) Veröffentlichungstag der Anmeldung: 01.03.2006
(73) Patentinhaber: Clariant Produkte (Deutschland) GmbH, 65929 Frankfurt am Main (DE)
(72) Erfinder: Kayser, Christoph, Dr., 55127 Mainz (DE); Botthof, Gernold, Dr., 36326 Antrifttal (DE); Heier, Karl Heinz, Dr., 60598 Frankfurt am Main (DE); Tardi, Aranka, 63543 Neuberg (DE); Krull, Matthias, Dr., 55296 Harxheim (DE); Schäfer, Michael, 63584 Gründau (DE)

(56) Entgegenhaltungen:
- WO-A-03/033860

## Beschreibung

Die vorliegende Erfindung betrifft ein wasserlösliches, thermostabiles Polymer, das mit mehrwertigen Metallionen auch bei Temperaturen oberhalb 200°C langzeitstabile Gele bildet. Diese Polymere können zum Beispiel erfolgreich zur Verringerung oder zur vollständigen Einstellung von Wasserzuflüssen aus einer unterirdischen Formation, die Kohlenwasserstoffe enthält, zu einer Produktionsbohrung eingesetzt werden.

Bei der Erschließung und Ausbeutung von Erdöl- und Erdgasvorkommen ist es oftmals von entscheidender Bedeutung, die Permeabilität der durchbohrten Gesteinsschichten insbesondere für Wasser gezielt zu modifizieren. So ist es beispielsweise unerwünscht, dass große Mengen Wasser einer Produktionsbohrung zufließen und andererseits, dass die Bohrspülung beim Niederbringen der Bohrung in die Formation gedrückt wird.

Oft existiert Wasser - meist als Salzlösung - in derselben Formation wie Öl oder Gas. Daher bringt die Gewinnung von Öl oder von Kohlenwasserstoffgas - insbesondere bei reifen Quellen - oftmals die Gewinnung von Wasser in einer solchen Menge mit sich, dass sie beträchtliche Probleme aufwirft; sie verursacht direkt oder indirekt Ablagerungen von Salzen in der Nachbarschaft der Bohrung oder in der Bohrung selbst, sie vergrößert beträchtlich die Korrosion aller Metallteile untertage oder übertage, sie vergrößert ohne Nutzen die Mengen der gepumpten, übergeführten und gelagerten Flüssigkeiten und sie schafft mit dem Öl Emulsionen, die schwierig übertage zu brechen sind und die untertage in den Hohlräumen der Formation Blockierungen bilden können. Oftmals macht auch die schiere Menge des geförderten Wassers die weitere Produktion des Kohlenwasserstoffs unmöglich oder unwirtschaftlich. Ein großer Teil des wertvollen Rohstoffs muss ungenutzt untertage verbleiben.

Gemäß dem Stand der Technik sind zahlreiche Verfahren vorgeschlagen und ausgeübt worden, die dazu bestimmt sind, die Wasserzuflüsse in die Bohrungen zur Gewinnung von Öl oder Kohlenwasserstoffgas zu verringern. Sie bestehen oft darin, in der Formation zwischen dem Wasser und der Bohrung oder zwischen dem Wasser und dem Öl oder Kohlenwasserstoffgas eine undurchdringliche Sperre einzubringen. Die gewöhnlich eingebrachten Mittel blockieren fast ebenso viel Öl oder Kohlenwasserstoffgas wie Wasser. Die Bestandteile dieser Sperrung können sein: Zement, Harze, Suspensionen von festen Teilen, Paraffine oder wasserlösliche Polymere, die durch Einbringen von sogenannten Vernetzern in der Lagerstätte vernetzt werden.

Zur Zeit verwendet man vielfach Polymere, die in wässriger Lösung in das poröse Milieu eingebracht werden, an der Oberfläche des Gesteins adsorbiert werden und in den Porenraum hineinragen, so dass sie sich dafür eignen, die Wasserzuflüsse zu verringern. In Gegenwart von Öl oder vor allem Kohlenwasserstoffgas kollabieren bzw. kontrahieren diese Gele, die nun ein vernachlässigbares Volumen an der Wand einnehmen und so den Durchgang für Öl und Kohlenwasserstoffgas weitgehend freilassen.

Aus US-A-4 095 651 ist die Verwendung von hydrolysierten Polyacrylamiden bekannt. Es hat sich jedoch gezeigt, dass dieser Polymertyp hauptsächlich gegenüber Wasser mit geringem Salzgehalt wirksam ist und durch das Wasser mit höherem Salzgehalt unwirksam wird. Bei höheren Temperaturen neigen diese hydrolysierten Polymere in Gegenwart von mehrwertigen Metallionen zudem zur Bildung von Niederschlägen, die die Poren der Gesteinsformationen verstopfen können.

Aus US-A-4 842 071 ist die Verwendung von nicht hydrolysierten Acrylamidpolymeren oder -copolymeren bekannt, die durch nachträgliches Einbringen einer wässrig-basischen Lösung in die zuvor behandelte Formation hydrolysiert werden. Dieses Verfahren erfordert zusätzlichen Arbeitsaufwand durch das sequentielle Einbringen zweier Lösungen. Die Erreichbarkeit der injizierten Polymerlösung durch die nachgelegte basische Lösung ist nicht immer gegeben und es besteht eine erhöhte Korrosionsanfälligkeit der eingesetzten Geräte. Zudem ist die Wirksamkeit der Polymerlösung nur bei erfolgter Umsetzung mit der wässrig-basischen Lösung gegeben, wobei der Grad der Wirksamkeit durch den Umsetzungsgrad beider Lösungen bestimmt wird.

EP-B-0 577 931 offenbart ein Verfahren zur Wasserabsperrung, das von Polymeren aus 5 - 90 Gew.-% AMPS, 5 bis 95 Gew.-% N-Vinylamiden sowie gegebenenfalls bis zu 90 Gew.-% N,N-Diallylammoniumverbindungen und gegebenenfalls bis zu 90 Gew.-% eines weiteren olefinisch ungesättigten Monomers Gebrauch macht. Diese Polymere sind unvernetzt. Dieses Verfahren wirkt nur bei relativ kleinen Permeabilitäten, etwa bei Gassonden mit Permeabilitäten im Bereich von einigen mD (Millidarcy).

EP-A-1 033 378 offenbart wasserlösliche, unvernetzte Copolymere aus Acrylamidopropenylmethylensulfonsäure, offenkettigen N-Vinylamiden und ringförmigen N-vinylsubstituierten Amiden sowie gegebenenfalls weiteren Comonomeren. Diese Copolymere zeigen insbesondere im Temperaturbereich von 130 bis 200°C verbesserte rheologische Eigenschaften und eine verbesserte Wirkung als Fluid-Loss Additiv.

WO-01/49971 offenbart ein Verfahren zur Wasserabsperrung unter Verwendung von Copolymeren, die durch mehrwertige Metallionen vernetzbare Carboxylat- und/oder Phosphonatgruppen und/oder zu Carboxylatgruppen hydrolysierbare funktionelle Gruppen tragen. In diesen Polymeren muss der Anteil der vernetzbaren Phosphonsäure- und Carboxylgruppen zwischen 0,01 und 7,5 mol-% liegen.

WO-03/033860 offenbart Copolymere aus Sulfonsäuregruppen tragenden Acrylamiden, Acrylamid, N-Vinylamiden und Vinylphosphonsäure, und ein Verfahren zur Verringerung oder vollständigen Einstellung von Wasserzuflüssen aus einer unterirdischen Formation durch Vernetzung dieser Copolymere mit wenigstens einer Zirkonium-, Chrom-, Titan- oder Aluminiumverbindung. Diese Polymere reduzieren bei Temperaturen von 123°C wirksam den Zufluss von Formationswasser zu Produktionsbohrungen für Erdöl und Erdgas. Das dort beschriebene Verfahren stellt eine Möglichkeit dar, die relative Permeabilität einer Kohlenwasserstoffe und Wasser führenden Lagerstätte für Kohlenwasserstoffen zu erhöhen. Man spricht in dem

Zusammenhang auch von relativer Permeabilitäts-Modifikation, RPM.

In Anbetracht der abnehmenden Erdöl- und Erdgasreserven werden zunehmend Lagerstätten in größeren Tiefen erschlossen, in denen Temperaturen von mehr als 200°C wie beispielsweise mehr als 230°C und in Extremfällen bis über 250°C herrschen. Unter diesen Bedingungen sind die bekannten vernetzbaren Polymere chemisch nicht stabil, so dass sie ihre Wirkung als Fluid-Loss-Additive oder zur Veränderung der Permeabilität der Formation gegenüber Wasser und Öl nicht entfalten können. Zudem fallen sie unter derart extremen Bedingungen oftmals mit Erdalkali-lonen unter Bildung unlöslicher Salze aus. Zwar lässt sich die Temperaturstabilität der Gele gemäß der Lehre der WO 03/033860 durch Erhöhung des Anteils an AMPS erhöhen, doch geht dies bei sehr hohen AMPS-Gehalten zu Lasten der Vernetzbarkeit und somit der erreichbaren Gelstärke und der Wirksamkeit.

Insofern ist es Aufgabe der vorliegenden Erfindung, durch mehrwertige Metallionen reversibel vernetzbare Polymere zur Verfügung zu stellen, die bei Raumtemperatur eine niedrige Viskosität besitzen und erst oberhalb von etwa 150°C mit mehrwertigen Metallionen Gele bilden, die ihrerseits auch bei Temperaturen oberhalb von 200°C wie beispielsweise oberhalb 230°C und in Extremfällen oberhalb von 250°C langzeitstabil sind, ohne Ausfällungen zu bilden.

Überraschenderweise hat sich gezeigt, dass Polymere mit gleichzeitig deutlich verbesserter Thermostabilität, verbesserten Gelbildungseigenschaften mit mehrwertigen Metallionen und verbesserter Stabilität gegenüber salinen Wässern durch Einsatz von Phosphonsäuregruppen tragenden Polymeren mit definierten Anteilen an Sulfonsäuregruppen tragenden Monomeren, offenkettigen und insbesondere cyclischen Vinylamiden sowie nur geringfügigen Anteilen Acrylamid erhalten werden.

Gegenstand der Erfindung sind somit bei Temperaturen von über 150°C mit mehrwertigen Metallionen reversibel vernetzbare Copolymere, enthaltend
i) 80 - 90 Gew.-% einer oder mehrerer Struktureinheiten der Formel A 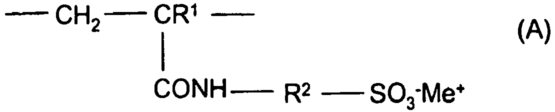 worin
   R¹ Wasserstoff oder Methyl,
   R² C₂-C₁₀-Alkylen, und
   Me⁺ ein Ammonium- oder ein Alkalimetallion bedeuten,
ii) 1 bis 10 Gew.-% einer oder mehrerer Struktureinheiten der Formel B 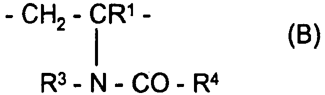 worin R³ und R⁴ unabhängig voneinander Wasserstoff, Methyl oder Ethyl bedeuten,
iii) 1 bis 10 Gew.-% einer oder mehrerer Struktureinheiten der Formel C, 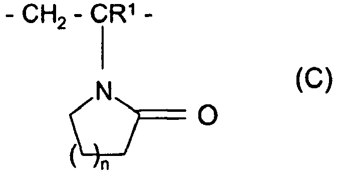 worin n eine Zahl zwischen 1 und 6 ist
iv) 0,1 bis 5 Gew.-% Struktureinheiten der Formel D 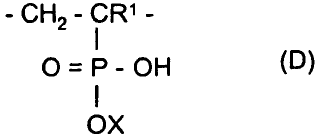 worin X Wasserstoff, ein Ammonium- oder ein Alkalimetallion bedeutet, und gegebenenfalls
v) 0 bis 10 Gew.-% einer oder mehrerer Struktureinheiten der Formel E 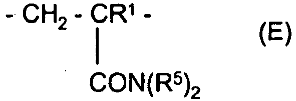 worin R⁵ für Wasserstoff, Methyl und/oder Ethyl steht,
   mit der Maßgabe, dass der Gehalt der Copolymere an Struktureinheiten B) und C) zwischen 6 und 15 Gew.-% liegt.

Ein weiterer Gegenstand der Erfindung ist ein Verfahren zur Veränderung der Permeabilität einer unterirdischen Formation für Wasser bzw. saline Wässer, bei welchem man gleichzeitig mit der wässrigen Lösung des Copolymers, welches Struktureinheiten A), B), C), D) und gegebenenfalls E) wie oben definiert enthält, oder danach, in die Formation bzw. Lagerstätte bei Temperaturen oberhalb 200°C einen Vernetzer für das Copolymer einbringt, der wenigstens eine mehrwertige Erdalkali- und/oder Übergangsmetallverbindung umfasst, und anschließend die Bohrung zur Gewinnung von Erdöl und/oder Erdgas in Betrieb nimmt.

Ein weiterer Gegenstand der Erfindung ist die Verwendung eines Copolymers, welches Struktureinheiten A), B), C), D) und gegebenenfalls E) wie oben definiert enthält, und eines Vernetzers für das Copolymer, der wenigstens eine mehrwertige Erdalkali- und/oder Übergangsmetallverbindung umfasst, zur Veränderung der Permeabilität einer unterirdischen Formation für Wasser bzw. saline Wässer, bei Temperaturen oberhalb 200°C.

Ein weiterer Gegenstand der Erfindung ist eine Zusammensetzung, die mindestens ein Copolymer, welches Struktureinheiten A), B), C), D) und gegebenenfalls E) wie oben definiert enthält, sowie mindestens einen Vernetzer umfasst, der eine Verbindung eines mehrwertigen Metallions enthält.

Vorzugsweise vernetzt diese Zusammensetzung erst in der Öl und Wasser führenden Formation nach gemeinsamem oder sequentiellem Einpressen von Copolymer und Vernetzer. Besonders bevorzugt wird der Vernetzer gemeinsam mit dem Copolymer in die Formation bzw. Lagerstätte eingebracht.

In den Struktureinheiten A) bedeutet R² bevorzugt ein geradkettiges oder verzweigtes, gesättigtes C₂-C₆-Alkylen, besonders bevorzugt verzweigtes, gesättigtes C₄-Alkylen. R¹ bedeutet bevorzugt Wasserstoff. Die Struktureinheiten A) leiten sich vorzugsweise von 2-Acrylamido-2-methylpropan-sulfonsäure (AMPS^{®}) ab. Das Copolymer enthält vorzugsweise 82 bis 88 Gew.-%, der Struktureinheiten der Formel 1, die insbesondere von AMPS abgeleitet sind.

Die Struktureinheiten B) leiten sich von N-Vinylformamid, N-Vinylacetamid und N-Vinyl-N-methylacetamid ab. In bevorzugten Struktureinheiten B) bedeuten R¹ Wasserstoff, R³ Wasserstoff oder Methyl und R⁴ Wasserstoff, Methyl oder Ethyl, insbesondere bedeuten R³ und R⁴ gleichzeitig Wasserstoff. Vorzugsweise enthält das Copolymer 2 bis 8 Gew.-%, insbesondere 2,5 bis 7 Gew.-% Struktureinheiten B).

Die Struktureinheiten C) leiten sich von cyclischen Amiden ab, die am Stickstoffatom eine Vinylgruppe tragen. Bevorzugte cyclische Amide enthalten einen Ring mit 5 bis 10 Atomen, von denen mindestens eines ein Stickstoffatom ist. An die Ringatome können weitere Substituenten wie C₁-C₅-Alkylreste gebunden sein. Bevorzugt steht R¹ für Wasserstoff und n für 1 oder 3. Besonders bevorzugt sind N-Vinyl-pyrrolidon, N-Vinyl-valerolactam und N-Vinyl-caprolactam. Vorzugsweise enthält das Copolymer 2 bis 8 Gew.-%, insbesondere 2,5 bis 7 Gew.-% Struktureinheiten C).

Der Gesamtgehalt an Struktureinheiten B) und C) liegt bevorzugt zwischen 7,5 und 12,5 Gew.-%. Das Verhältnis von B) zu C) ist bevorzugt kleiner als 3:1, wie beispielsweise zwischen 2:1 und 1:20 und besonders bevorzugt zwischen 1:1 und 1:10.

Struktureinheit D) leitet sich bevorzugt von Vinylphosphonsäure und ihren Salzen mit Alkalüonen wie beispielsweise Natrium und Kalium, Ammoniak, niederen Alkylaminen und/oder Alkanolaminen ab. Bevorzugt ist Vinylphosphonsäure. Die Struktureinheiten E) liegen vorzugsweise in Mengen von 0,5 bis 3, insbesondere 1,0 bis 2,5 Gew.-% vor.

Die Struktureinheiten E) leiten sich von Acrylamid, Methacrylamid und/oder N,N-Dimethylacrylamid ab. Bevorzugt ist Acrylamid. Vorzugsweise enthalten die erfindungsgemäßen Polymere von 0,1 bis 8 Gew.-%, insbesondere 1 bis 5 Gew.-% der Struktureinheiten E).

Die erfindungsgemäßen Copolymere können untergeordnete Mengen von beispielsweise bis zu 5 Gew.-%, speziell 0,1 bis 3 Gew.-% weiterer Monomere enthalten. Bevorzugte weitere Comonomere leiten sich von ethylenisch ungesättigten Verbindungen ab, die eine hydrophile Ester-, Ether-, Amid-, Hydroxyl-, Carbonsäure- und/oder Sulfonsäuregruppe bzw. deren Salze tragen. Beispiele für bevorzugte weitere Monomere sind Acrylsäure, Methacrylsäure, Maleinsäure, Fumarsäure, Itaconsäure, Hydroxyethylacrylat, Hydroxyethylmethacrylat, Hydroxypropylacrylat, Hydroxypropylmethacrylat, Vinylacetat, Styrolsulfonsäure und Methallylsulfonsäure.

In einer besonders bevorzugten Ausführungsform addieren sich die Anteile der Struktureinheiten A), B), C), D) und gegebenenfalls E) zu 100 Gew.-%.

Die Molekulargewichte der erfindungsgemäßen Copolymere liegen vorzugsweise zwischen 50.000 und 2·10⁷ g/mol. Besonders bevorzugt sind Molekulargewichte von 100.000 bis 10⁶ g/mol, insbesondere 5·10⁵ bis 8·10⁶ g/mol. Dies entspricht nach Fikentscher als 0,5 gew.-%ige Lösung in destilliertem Wasser bei 25°C bestimmten k-Werten (DIN 53726 und Adolf Echte, Handbuch der Technischen Polymerchemie, VCH, 1993, S. 264) von 120 bis 350 und bevorzugt von 150 bis 250 bzw. in destilliertem Wasser bei 25 °C und einer Polymerkonzentration von 0,5 Gew.-% bestimmten Brookfield-Viskositäten von 2.000 cP bis 200.000 cP.

Die erfindungsgemäßen Copolymere sind durch Copolymerisation der ethylenisch ungesättigten Verbindungen erhältlich, aus denen sich die Struktureinheiten der Formeln A, B, C, D und E ableiten. Es handelt sich bei den Copolymeren um Hauptkettencopolymere, nicht um Pfropfcopolymere.

Die Copolymerisation kann nach allen bekannten Polymerisationsverfahren durchgeführt werden. Bevorzugt erfolgt die Polymerisation in Wasser oder in mit Wasser zumindest teilweise mischbaren oder emulgierbaren organischen Lösemitteln wie niederen Alkoholen mit 1 bis 8 C-Atomen im Bereich von pH 4 bis 12, vorzugsweise bei pH 5 bis 9 und insbesondere bei pH 5,5 bis 8. Vorzugsweise wird sie als Gel- oder Fällungspolymerisation durchgeführt.

Zur Einstellung des pH-Wertes werden zweckmäßigerweise alkalisch reagierende Salze von Alkalimetallen, z.B. Alkalikarbonate, Alkalihydrogencarbonate, Alkaliborate, Di- oder Tri-Alkaliphosphate, Alkalihydroxide, Ammoniak oder organische Amine der Formel NR⁷R⁸R⁹ eingesetzt, worin R⁷, R⁸ und R⁹ unabhängig voneinander Wasserstoff, Alkyl mit 1 bis 10 Kohlenstoffatomen, bevorzugt 1 bis 6 Kohlenstoffatomen oder Hydroxyethyl bzw. Hydroxypropyl ist und wobei mindestens einer der Reste R⁷, R⁸ und R⁹ verschieden ist von Wasserstoff. Bevorzugte Basen zur Einstellung des pH-Wertes sind die oben genannten Alkaliverbindungen, insbesondere Natriumhydroxid, Kaliumhydroxid, Natriumkarbonat, Natriumhydrogenkarbonat, Kaliumkarbonat und Kaliumhydrogenkarbonat und Natrium- oder Kaliumborate, Ammoniak, Triethylamin, Dibutylamin, Triethanolamin und n-Butyl-diethanolamin. Auch Mischungen aus verschiedenen Alkalimetallsalzen, Ammoniak und/oder Aminen sind zur Einstellung des pH-Werts geeignet.

Die Polymerisationsreaktion kann initiiert werden durch energiereiche elektromagnetische oder korpuskulare Strahlung oder durch Substanzen, die Radikale bilden. Dementsprechend sind als Polymerisationsinitiatoren geeignet organische Perverbindungen, wie z.B. Benzoylperoxid, Alkylhydroperoxid, wie z.B. Butylhydroperoxid, Cumolhydroperoxid, p-Menthanhydroperoxid, Dialkylperoxide, wie z.B. Bi-, tert.-Butylperoxid oder anorganische Perverbindungen, wie z.B. Kalium- oder Ammoniumpersulfat und Wasserstoffperoxid, ferner Azoverbindungen, wie z.B. Azo-bis-isobutyronitril, Dimethyl-2,2'-Azobisisobutyrat, 2,2'-Azo-bis-(2-amidinopropan)-hydrochlorid oder Azo-bis-isobutyramid. Es ist vorteilhaft, die organischen oder anorganischen Perverbindungen in Kombination mit reduzierenden Substanzen beispielsweise Natriumpyrosulfit, Natriumhydrogensulfid, Thionylchlorid, Ascorbinsäure oder Kondensationsprodukte von Formaldehyd mit Sulfoxylaten einzusetzen. Besonders vorteilhaft lässt sich die Polymerisation unter Einsatz von Mannich-Addukten von Sulfinsäuren, Aldehyden und Aminoverbindungen ausführen, wie sie beispielsweise in DE-13 01 566 beschrieben worden sind.

Es ist weiterhin bekannt, den Polymerisationsansätzen kleine Mengen von sogenannten Moderatoren zuzusetzen, die den Verlauf der Reaktion dadurch beeinflussen, dass sie das Reaktionsgeschwindigkeits-Zeitdiagramm abflachen. Sie führen damit zu einer Verbesserung der Reproduzierbarkeit der Reaktion und ermöglichen damit, einheitliche Produkte mit äußerst geringen Qualitätsabweichungen herzustellen. Beispiele für geeignete Moderatoren dieses Typs sind Nitrilo-tris-propionylamid oder Hydrohalogenide von Monoalkylaminen, Dialkylaminen oder Trialkylaminen, wie z.B. Dibutylaminhydrochlorid. Auch bei der Herstellung der erfindungsgemäßen Copolymerisate können solche Moderatoren mit Vorteil verwendet werden.

Weiterhin können den Polymerisationsansätzen so genannte Regler zugesetzt werden; das sind solche Verbindungen, die das Molekulargewicht der hergestellten Polymerisate beeinflussen. Geeignete bekannte Regulatoren sind z.B. Alkohole, wie Methanol, Ethanol, Propanol, Isopropanol, n-Butanol, sec.-Butanol und Amylalkohole, Aldehyde, Ketone, Alkylmercaptane, wie z.B. Dodecylmercaptan und tert.-Dodecylmercapten, Thioglykolsäure, Isooctylthioglykolat und einige Halogenverbindungen, wie z.B. Tetrachlorkohlenstoff, Chloroform und Methylenchlorid.

Üblicherweise wird die Polymerisation in einer Schutzgasatmosphäre ausgeführt, vorzugsweise unter Stickstoff.

Die Reaktion wird bevorzugt in Lösung, in inverser Emulsion, in Suspension, als Gelpolymerisation oder unter den Bedingungen der Fällungspolymerisation bei Temperaturen von -5 bis 120°C, vorzugsweise von 5 bis 100°C, ausgeführt.

Wenn Wasser als Lösungsmittel für die Polymerisationsreaktion eingesetzt wird, so verläuft sie bei niedrigen Monomerkonzentrationen in Lösung, und eine wässrige viskose Lösung des Copolymerisats wird erhalten.

Das Reaktionsprodukt der Copolymerisation kann isoliert werden, entweder durch Abdestillieren des Wassers aus der Lösung, oder durch Vermischen der wässrigen Lösung mit organischen Lösungsmitteln, die mit Wasser vollständig mischbar sind, in denen aber das Copolymerisat unlöslich ist. Bei der Zugabe solcher organischen Lösungsmittel zu der wässrigen Polymerlösung fällt das entstandene Copolymerisat aus und kann von der flüssigen Phase, z.B. durch Filtration abgetrennt werden. Vorzugsweise wird jedoch die erhaltene wässrige Lösung des Polymerisats bzw. Copolymerisats direkt für den weiteren Gebrauch eingesetzt, gegebenenfalls nach Einstellung auf eine bestimmte gewünschte Konzentration.

Bei höheren Monomerkonzentrationen von 20 bis 70 Gew.-% in wässrigen Lösungen läuft die Polymerisation bevorzugt als Gelpolymerisation ab. Besonders bevorzugt sind dabei Konzentrationen von 20 bis 55 Gew.-%, insbesondere von 25 bis 40 Gew.-%. Der pH-Wert der Monomer Lösung wird dazu, wie oben beschrieben, eingestellt, die Lösung mit Schutzgas inertisiert, temperiert und mit einem geeigneten Initiatorsystem polymerisiert, sodass ein schnittfestes Gel entsteht. Das Polymer kann aus dem Gel isoliert werden, in dem es mechanisch zerkleinert und getrocknet wird. Das getrocknete Polymer wird mit einer geeigneten Mühle auf die gewünschte Korngröße gemahlen. Die Gelpolymerisation ist ein Verfahren, um bevorzugt Polymere mit hohen oder extrem hohen Molekulargewichten herzustellen. Mit der Gelpolymerisation werden bevorzugt Polymere mit Molekulargewichten hergestellt, die k-Werten von > 200, bevorzugt von 250 bis 350 entsprechen.

Ein weiteres bevorzugtes Polymerisationsverfahren ist die inverse Emulsionspolymerisation. Dabei wird eine Monomerlösung, wie oben beschrieben, als inverse Emulsion in einer geeigneten Trägerflüssigkeit emulgiert. Bevorzugt wird eine Wasser-in-Öl-Emulsion in organischen Lösemitteln bzw. Ölen erzeugt. Die kontinuierliche Phase ist dabei die Ölphase, die diskontinuierliche Phase ist die wässrige Monomerphase. Diese wird bevorzugt mit Hilfe geeigneter Emulgatoren stabilisiert. Die Größe der emulgierten Teilchen wird von der eingetragen Art und Stärker der Energie bestimmt, die die Zerteilung der wässrigen Monomerlösung in kleine oder mikroskopische Tröpfchen bewirkt. Diese Zerteilungsenergie wird bevorzugt durch Scherenergie eines geeigneten Rühr- oder Homogenisierwerkzeugs, oder auch durch den Einsatz von Ultraschallquellen eingetragen. Ebenso wird die Größe und Stabilität der Emulsionspartikel wird durch die Art und Konzentration des Emulgatorsystems bestimmt. Mit Hilfe der inversen Emulsionspolymerisation werden bevorzugt Polymere mit hohem oder extrem hohen Molekulargewicht hergestellt, bevorzugt in einem Bereich von 5·10⁵ bis 10⁷ Dalton. Bevorzugt werden Polymere erzeugt, deren invertierte Emulsionen mit einer Polymerkonzentration von 0,5 Gew.-% in destilliertem Wasser eine Brookfieldviskosität bei 50 Umdrehungen pro Minute von 1.000 bis 20.000 cP aufweisen.

Wegen ihres Gehalts an Invertierungsmittel und des hohen Molekulargewichts werden zur Charakterisierung des Molekulargewichts von inversen Emulsionspolymeren Lösungsviskositäten nach Brookfield bestimmt. Die inverse Polymeremulsion wird dafür nach bekannten Methoden invertiert. Die Viskositätsmessung erfolgt mit einem digitalen Brookfield-Viskosimeter mit geeigneter Spindel bei 50 rpm.

Das Polymer wird bevorzugt nicht aus der Emulsion isoliert. Vielmehr dient die Emulsion dazu, ein hochmolekulares Polymer in fließfähiger Form darzureichen. Die Konzentration des Polymers in der Emulsion beträgt bevorzugt 20 bis 50 Gew.-%. Ebenso ist es möglich, die Emulsion in eine Suspension umzuwandeln, in dem das Wasser aus der Emulsion destilliert wird. Damit sind Polymeranteile in einer fließfähigen Suspension von über 50 Gew.-%, bevorzugt zwischen 50 und 70 Gew.-% zu erzielen.

Wenn die Copolymerisation in einem organischen Lösungsmittel wie z.B. in einem niederen Alkanol, z.B. in tert.-Butanol, durchgeführt wird, so verläuft sie unter den Bedingungen der Fällungspolymerisation. In diesem Fall fällt das entstandene Polymerisat bzw. Copolymerisat im Verlauf der Reaktion in fester Form aus und kann leicht in üblicher Weise, wie z.B. durch Absaugen und anschließendes Trocknen, isoliert werden. Selbstverständlich ist es auch möglich und in manchen Fällen bevorzugt, das Lösungsmittel aus dem Reaktionsansatz heraus zu destillieren.

Als Vernetzer für die erfindungsgemäßen Polymere sind insbesondere mehrwertige Metallionen, beispielsweise von Elementen der II. und III. Hauptgruppe sowie der III.-VI. Nebengruppe des Periodensystems, geeignet. Bevorzugt werden Salze und Komplexe von Zirkonium, Chrom, Titan und/oder Aluminium verwendet. Bevorzugt sind zwei-, drei- und vierwertige Ionen dieser Metalle. Geeignete Anionen sind einbis dreiwertige organische Anionen wie z. B. Carbonat, Acetat, Propionat, 2-Ethylhexanoat, Neononanoat, Neodecanoat, Laktat, Glukonat, Zitrat, Maleat, Glycinat, Tartrat, Ethylacetoacetat, und deren Kombinationen. Besonders bevorzugte Vernetzer sind Verbindungen des Chroms, des Zirkoniums und/oder des Titans. Insbesondere bevorzugt sind Chromsalze, insbesondere Chromacetat, -laktat und -zitrat und Salze bzw. Komplexe von Zirkonium(IV), insbesondere Zirkoniumacetat, -lactat, -zitrat und Zirkoniumgluconat.

Die erfindungsgemäßen Copolymere werden im Allgemeinen in wässriger Lösung in die Formation oder Lagerstätte eingebracht. Die Konzentration der wässrigen Polymerlösung kann innerhalb großer Bereiche gewählt werden und liegt vorzugsweise zwischen 50 ppm und 10 %, insbesondere 0,05 % bis 5 % in Gewichtsanteilen. Die gewählte Konzentration entscheidet über die Festigkeit des entstehenden Polymergels und wird durch die gewünschte Verwendung bestimmt.

Die wässrige Polymerlösung kann eines oder mehrere Salze von Alkali- oder Erdalkalimetallen, insbesondere NaCl, KCl, MgCl₂, MgSO₄, CaCl₂, Na₂SO₄, K₂SO₄ und/oder NaNO₃ und allgemein von Chloriden, Sulfaten oder Nitraten von Metallen, wie z.B. Natrium, Kalium, Calcium oder Magnesium enthalten. Man bevorzugt Lösungen, die Natriumchlorid oder Kaliumchlorid enthalten. Besonders bevorzugt sind Seewasser, Formationswasser oder auch Prozesswasser. Die Konzentration an Salzen der salzhaltigen Polymerlösung kann innerhalb großer Bereiche gewählt werden und bis zur Sättigungsgrenze der Salze reichen. In einer bevorzugten Ausführungsform wird Kaliumchlorid eingesetzt, welches das Aufquellen von Ton in den Formationen verhindert. Ein Aufquellen des Tons könnte zu irreversiblen Formationsschäden führen.

Allgemein fällt für ein gegebenes Salz die Viskosität der Polymerlösung ab, wenn die Konzentration an diesem Salz wächst. Man kann also vorteilhafter Weise gemäß dem vorliegenden Verfahren eine Polymerlösung verwenden, deren Salzgehalt an Natriumchlorid höher ist als der Salzgehalt des Wassers der Lagerstätte.

Der Vernetzer kann direkt als Feststoff eingesetzt werden, bevorzugt wird er aber in Form wässriger Lösungen verwendet. Die Konzentration der Vernetzerlösung kann dabei über einen breiten Bereich variieren. Die Konzentration der Vernetzers in der Vernetzerlösung kann von etwa 0,001 Gew.-% bis zur Sättigung variiert werden. Vorzugsweise liegt sie im Bereich von 1 Gew.-% bis 25 Gew.-%.

Für die sequentielle Anwendung zum Beispiel bei der relativen Permeabilitätskontrolle von Kohlenwasserstofflagerstätten haben sich Lösungen mit einer Konzentration von 0,001 bis 2 Gew.-% bezogen auf die Metallionen besonders bewährt. Bevorzugt liegt die Konzentration des Vernetzers im Bereich von 0,01 bis 1 Gew.-%, insbesondere im Bereich von 0,025 bis 0,5 Gew.-% bezogen auf die eingesetzten Metallionen. Als Lösemittel für die Vernetzerlösung werden bevorzugt die gleichen Medien verwendet wie für die Polymerlösung.

Bei Anwendungen, wie z. B. Verstopfungspillen gegen Spülungsverluste kommen bevorzugt höher konzentrierte Lösungen mit Konzentrationen von 1 Gew.-% bis zur Sättigung, bevorzugt 5 bis 15 Gew.-% zum Einsatz. Alternativ können dabei auch die lösemittelfreien Substanzen zum Einsatz kommen.

Bei gemeinsamer Anwendung von Polymer und Vernetzer werden die Komponenten bevorzugt in den oben genannten Konzentrationen eingesetzt.

Die Polymer- und/oder Vernetzerlösungen können auch bis zu 20 Vol.-% eines oder mehrerer weiterer Lösemittel enthalten, um z.B. Kohlenwasserstoffreste von der Oberfläche der wasserführenden Formation zu entfernen und ein Aufziehen des wasserlöslichen Polymers auf die Gesteinsoberfläche zu erleichtern. Geeignete Lösemittel hierfür sind niedere Alkohole, (Alkyl)glykole und (Alkyl)polyglykole. Dabei ist jedoch darauf zu achten, dass das Polymer in Lösung bleibt und nicht ausfällt.

Die Copolymer- sowie die Vernetzerlösung bzw. bei gemeinsamer Anwendung die Lösung beider Bestandteile werden bevorzugt auf einen pH-Wert eingestellt, der keine Säure-/Base-Reaktion in der zu behandelnden Formation auslöst. Bevorzugt werden diese Lösungen im Bereich von pH 4 bis 9 gepuffert. Beispielsweise hat es sich bewährt, mit einem Acetat-Puffer im pH-Bereich von pH 5 bis 8 und speziell von pH 4,5 bis 5,5 zu arbeiten.

Durch entsprechende Wahl der Gehalte der Struktureinheiten der Formeln A, B, C, D und gegebenenfalls E sowie der Art und Konzentration des eingesetzten Vernetzers können die untere Grenztemperatur der Gelbildung, die Gelstärke und die Lebensdauer des Gels unter den gegebenen Bedingungen untertage gezielt eingestellt werden. Dabei sind beispielsweise Lagerstätten mit Temperaturen von über 200 °C wie insbesondere von über 230°C mit den erfindungsgemäßen Copolymeren gezielt in ihrer Permeabilität für Wasser und Kohlenwasserstoff beeinflussbar.

Die Art der Einbringung der Polymerlösung ist an sich nicht neu. Man kann sich z.B. auf die Ausführungen in der US-A-3 308 885 beziehen. Allgemein gesagt, übt man auf die Polymerlösung einen Druck aus, der größer ist als der Druck, der von den Fluiden, wie Lagerstättenwasser, Öl und Kohlenwasserstoffgas in der Lagerstätte ausgeübt wird, die für die Behandlungsweise gewählt wird (Lagerstättendruck).

In einer weiteren bevorzugten Ausführungsform des Verfahrens wird zwischen der Einbringung des Copolymers und der Einbringung des Vernetzers Wasser oder eine verdickte wässrige Polymerlösung als Spacer in die Bohrung eingebracht.

In einer weiteren bevorzugten Ausführungsform kann das oben beschriebene Einbringen eines Spacers auch oder zusätzlich nach dem Einbringen des Vernetzers erfolgen.

In einer weiteren bevorzugten Ausführungsform kann nach der Einbringung der Lösungen des Copolymers und des Vernetzers eine mehr oder weniger lange Phase des Einschlusses erfolgen, bevor die Sonde wieder auf Produktion umgestellt wird.

Ebenso kann das Einbringen von Copolymerlösung und Vernetzer in beliebigen Mengenverhältnissen wiederholt werden, bevor oder nachdem die Sonde wieder auf Produktion zurückgeschaltet wurde. Hiermit ist es möglich, verschiedene Zonen gezielt zu behandeln.
In einer weiteren bevorzugten Ausführungsform werden Teile oder auch die gesamte Polymer-Wasser-Mischung mit Vernetzer vorbehandelt injiziert.

Die Vernetzung des Polymers kann im Bedarfsfalle durch Einwirkung bestimmter Stoffe auf die Gelbarriere aufgehoben werden. Grundsätzlich eignen sich Mittel, die für das Metallion stärkere Komplexliganden sind als die Phosphonsäure- bzw. Amin oder Amidgruppen des Polymers, sowie Oxidationsmittel. Bewährt haben sich in dem Zusammenhang Flusssäure oder ihre Vorläufer und starke Chelatbildner wie z. B. EDTA. Unter den Oxidationsmitteln haben sich Persulfate, Perborate und Wasserstoffperoxid bewährt.

Die erfindungsgemäßen Polymersysteme sind für vielseitige Einsatzmöglichkeiten im Bereich der Exploration, Komplettierung und Förderung von Erdöl- und Erdgasvorkommen geeignet. Besonders vorteilhaft sind sie bei einem Einsatz für die Erschließung und Förderung von Erdöl- und Erdgasvorkommen, die unter extrem hohen Temperaturen von über 200°C wie beispielsweise oberhalb 230°C, wie sie häufig in großen Tiefen auftreten, lagern. Insbesondere sind sie geeignet, den Wasserzufluss aus einer unterirdischen Formation, die Kohlenwasserstoffe enthält, zu einer Produktionsbohrung zu verringern bzw. zu unterbinden. Des gleichen können sie erfolgreich zur Absperrung unterirdischer Formationen gegen das Abfließen von Bohrspülungen aus der Bohrung eingesetzt werden. Üblicherweise werden sie dazu in Kombination mit weiteren Hilfsmitteln eingesetzt. Während herkömmliche Polymere durch nachträgliches, separates Einpressen des Vernetzers in die Formation zum Gelieren gebracht werden mussten, können die erfindungsgemäßen Polymere auf Grund ihrer mangelnden Gelbildungsneigung bei niedrigen Temperaturen gemeinsam mit dem Vernetzer in die Formation gepumpt werden, ohne vorzeitig zu gelieren. Neben einem vereinfachten Handling führt dies zu einer besseren und homogeneren Durchdringung der Formation mit dem Gel.

Die erfindungsgemäßen, höhermolekularen Polymere ergeben in der Konzentration von 5 Gew.-% eine schwer rührbare Polymerlösung. Daher sind die höhermolekularen Polymere für Anwendungen interessant, bei denen sehr geringe Polymerkonzentrationen sehr elastische Gele, deformierbare Gele des Typs E bis F (vergleiche Tabelle) hervorbringen sollen. Diese Polymere werden bevorzugt mittels des inversen Emulsions- und Gelpolymerisationsprozess hergestellt. Als Anwendungen, die zu diesem Profil passen, wären zum Beispiel Polymerflutungen von Formationen zur Kontrolle der relativen Permeabilität der Lagestätte gegenüber Kohlenwasserstoffen und Wasser denkbar.

Die Polymerlösungen mit niedrigerer Viskosität sind auch in 5 gew.-%iger Lösung noch leicht rührbar und pumpbar. Sie werden bevorzugt in Form des Lösungs- und Fällungspolymerisationsprozess hergestellt. Diese Polymere eignen sich besonders für höher konzentrierte, feste, elastische Polymergele, wie zum Beispiel für Anwendungen als Verstopfungspillen o. ä. geeignet erscheinen.

### Beispiele

Die nachfolgend aufgelisteten Beispiele zur Synthese von geeigneten Polymeren illustrieren die Erfindung. Die in den Ausführungs- und Tabellenbeispielen benutzten Abkürzungen haben folgende Bedeutung:

**Tabelle 1: Verwendete Abkürzungen**

| | |
|---|---|
| AM | Acrylamid |
| AMPS^{®} | 2-Acrylamido-2-methyl-propansulfonsäure |
| NVC | N-Vinylcaprolactam |
| NVF | N-Vinylformamid |
| NVP | N-Vinylpyrrolidon |
| VIMA | N-Vinyl-N-methyl-acetamid |
| VPS | Vinylphosphonsäure |

### Beispiel 1 (Inverse Emulsionspolymerisation)

7,5 g Genapol^{®} UD 050 (Nichtionischer Emulgator auf der Basis eines oxethylierten Undecylalkohols) und 20,5 g Span^{®} 80 (Nichtionischer Emulgator auf Basis eines Zuckeralkohol-Stearats) werden in 350 ml Isopar^{®} M (Technisches Gemisch von Isoparaffinen mit einem Siedepunkt von ca. 200 - 240°C) aufgelöst und die resultierende Lösung in ein 1-L Reaktionsgefäß gegeben, das mit einem Rührer, Thermometer und Gaseinleitungsrohr versehen ist.

Dann wird eine wässrige Monomerlösung durch Auflösen von
85 g AMPS,
5 g AM und
1,7 g Vinylphosphonsäure (VPS) in
120 ml Wasser hergestellt.

Der pH-Wert der wässrigen Monomerlösung wird mit Ammoniak (25 %ig) auf 8,5 eingestellt, bevor 5 g NVF und 3.3 g NVP zugegeben werden. Unter schnellem Rühren wird die wässrige Monomerlösung der organischen Phase zugefügt. Das Reaktionsgefäß wird durch Evakuieren und anschließendes Füllen mit Stickstoff inertisiert. Danach wird dem Gemisch eine Lösung von 0,02 g t-Butylhydroperoxyd in 3 ml Wasser zugefügt. Nach 5 min. Nachrühren wird die Polymerisation durch Zugabe von 0,01 g Ascorbinsäure gestartet. Die Reaktion dauert etwa 1½ Stunden, wobei die Reaktionstemperatur durch Wasserkühlung zwischen 30°C und 40°C gehalten wird. Nach Abklingen der Wärmeentwicklung wird das Reaktionsgemisch noch 2 h bei 60 °C nachgerührt. Es resultiert eine stabile Emulsion. Die inverse Polymeremulsion wird im Becherglas mit 500 ml destilliertem Wasser, dem Äquivalent inverser Emulsion zu 0,5 Gew.-% Polymeren mit 5 g Genapol UD 050 invertiert und mit dem Blattrührer für 2 h gerührt. Die Lösung wird 2 Stunden auf 25°C temperiert, wobei eingeschlossene Luftblasen entweichen. Die Viskositätsmessung erfolgt mit einem digitalen Brookfield-Viskosimeter. Die resultierende, klare 0,5 gew.-%ige Polymerlösung hat eine Brookfield Viskosität von ca. 1400 cP (bei 25°C und 50 rpm, Spindel 2).

### Beispiel 2 (Lösungspolymerisation)

In einem Polymerisationsreaktor von 1 Liter Inhalt, ausgestattet mit Planschliffdeckel, Rührer, Thermometer und Gaseinleitungsrohr werden in
400 g Wasser
80 g AMPS gelöst,
3 g VPS zugesetzt
   und mit Ammoniak (25 %ig) neutralisiert. Dann werden 2 g Acrylamid, 7,5 g NVF und 7,5 g NVP hinzugefügt. Der pH-Wert wird mit Ammoniak auf 8,5 eingestellt und unter Rühren und Durchleiten von Stickstoff wird das Reaktionsgemisch auf 70°C erhitzt. 1 g einer wässrigen 10 %igen Dibutylamin-HCl-Lösung und 0,1 g Ammoniumpersulfat werden zugegeben. Die Reaktion dauert etwa 30 Minuten wobei die Temperatur auf 70°C ansteigt. Das Reaktionsgemisch wird viskos. Es wird unter Rühren noch 2 Std. bei 80°C nachgeheizt. Man erhält eine klare, hochviskose Lösung. Der k-Wert, ermittelt in destilliertem Wasser bei 25 °C, beträgt 205.

### Beispiel 3 (Gelpolymerisation)

In einem Polymerisationskolben von 1 I Inhalt, ausgestattet mit Planschliffdeckel, Rührer, Thermometer und Gaseinleitungsrohr wird durch Auflösen von
83,5 g AMPS und
1,5 g VPS in
250 g Wasser eine Monomerlösung hergestellt. Der pH-Wert wird mit Ammoniak (25 %ig) auf 8,5 eingestellt. Jeweils 5 g NVF, NVP und AM werden der Lösung zugesetzt. Unter Rühren und Durchleiten von Stickstoff werden schließlich 1 g einer wässrigen 10 %igen Dibutylamin-HCl-Lösung und 0,1 g Ammoniumpersulfat zugegeben. Unter Durchleiten von Stickstoff wird noch 3 Min. bei erhöhter Drehzahl gerührt. Die Stickstoffeinleitung wird beendet und Gaseinleitungsrohr und Rührer werden hochgezogen. Nach einer Induktionszeit von ca. 30 Min. setzt die Polymerisation ein, wobei die Temperatur von 20°C auf 78°C ansteigt und die Lösung in ein formstabiles Gel übergeht. Nach einer Nachwärmzeit von 8 h bei 60°C wird das Gel auf Raumtemperatur abgekühlt, zerkleinert, getrocknet und gemahlen. Der k-Wert, gemessen in destilliertem Wasser bei 25 °C, beträgt ca. 250.

### Beispiel4 (Fällungspolymerisation)

In einem Polymerisationskolben von 1 Liter Inhalt, ausgestattet mit Rührer, Ruckflusskühler, Thermometer, Tropftrichter und Gaseinleitungsrohr werden in 400 ml tert.-Butanol,
83,3 g AMPS und
   1,7 g VPS gelöst und mit Ammoniak auf pH-Wert 7,5 eingestellt. Zu dieser Lösung werden jeweils 5 g NVF, NVP und AM gegeben. Unter Rühren und Einleiten von Stickstoff wird die Monomerlösung auf 60°C erwärmt und 1 g Azoisobutyronitril zugegeben. Nach einer Induktionszeit von ca. 3 Min. setzt die Polymerisation ein, die Reaktionstemperatur steigt auf 80°C und das Polymerisat fällt aus. Es wird noch 2 h bei 80°C nachgeheizt. Das Copolymerisat wird durch Trocknen isoliert. Man erhält das Polymere in Form eines weißen, leichten Pulvers, das sich gut in Wasser löst und einen k-Wert, gemessen in destilliertem Wasser bei 25 °C, von 208 aufweist.

Gemäß diesen vier Verfahrensweisen wurden auch die Copolymerisate der folgenden Tabelle 2 hergestellt. Die zugrunde liegenden Polymerisationsverfahren sind in der Spalte "Methode" zu finden. Dabei bedeutet "IE" die Methode der inversen Emulsionspolymerisation.

**Tabelle 2: Charakterisierung der verwendeten Copolymere**

| | AMPS | AM | NVF | NVP | VPS | Zusatz | Methode | Polymer | k-Wert oder Viskosität |
|---|---|---|---|---|---|---|---|---|---|
| Beispiel | [Gew.-%] | [Gew.-%] | [Gew.-%] | [Gew.-%] | [Gew.-%] | [Gew.-%] | | | [cP]* |
| 1 | 85 | 5 | 5 | 3,3 | 1,7 | - | IE | A | 1430 cP |
| 2 | 80 | 2 | 7,5 | 7,5 | 3 | - | Lösung | B | 205 |
| 3 | 83,5 | 5 | 5 | 5 | 1,5 | - | Gel | C | 251 |
| 4 | 82 | 5 | 5 | 5 | 3 | - | IE | D | 1350 cP |
| 5 | 82 | 5 | 5 | 5 | 3 | - | Fällung | E | 212 |
| 6 | 83,3 | 5 | 5 | 5 | 1,7 | - | Fällung | F | 210 |
| 7 | 84 | 5 | 5 | 5 | 1 | - | Fällung | G | 211 |
| 8 | 84,5 | 5 | 5 | 5 | 0,5 | - | Fällung | H | 208 |
| 9 | 88 | 3,5 | 3 | 4 | 1,5 | - | Fällung | I | 207 |
| 10 | 83,3 | 5 | 5 | 5 | 1,7 | - | Lösung | J | 198 |
| 11 | 83,3 | 5 | 5 | 5 | 1,7 | - | Gel | K | 247 |
| 12 | 83,3 | 5 | 5 | 5 | 1,7 | - | IE | L | 1620 cP |
| 13(V) | 79 | 5 | 5 | 5 | 6 | - | Fällung | M | 210 |
| 14(V) | 85 | 10 | 1,7 | 2 | 1,3 | - | Fällung | N | 204 |
| 15(V) | 83 | 13 | 2,7 | 0 | 1,3 | - | Fällung | O | 205 |
| 16(V) | 83 | 13 | 0 | 2,7 | 1,3 | - | Fällung | P | 209 |
| 17(v) | 95 | 0,7 | 0 | 0 | 1,3 | 3,0 % NVC | Fällung | Q | 208 |
| 18(V) | 94,5 | 0,5 | 2,5 | 0 | 2,5 | - | Fällung | R | 204 |

| | | | | | | | | | |
|---|---|---|---|---|---|---|---|---|---|
| * Alternative Angabe. Der k-Wert ist dimensionslos, die Viskosität ist als Brookfield Viskosität in cP mit 0,5 Gew.-% invertiertem Polymer in Lösung, 50 rpm, Spindel 2 angegeben | | | | | | | | | |

Die Beispiele 1 bis 12 sind erfindungsgemäße Beispiele, welche die Erfindung illustrieren. Dagegen stellen die Beispiele 13 bis 18 Vergleichsbeispiele dar. Die resultierenden Polymere M bis R zeigen in ihren anwendungstechnischen Eigenschaften deutliche Nachteile gegenüber den erfindungsgemäßen Polymeren A bis L.

Die Molekulargewichte der Polymere werden durch den k-Wert nach Fikentscher charakterisiert (analog DIN 53726 in destilliertem Wasser). Der k-Wert ist eine konzentrationsunabhängige, dimensionslose Kennzahl. Sie steigt mit steigendem Molekulargewicht. Direkt vergleichbar sind Polymere gleicher Zusammensetzung. Aber auch bei relativ ähnlicher Zusammensetzung besitzen Polymere gleichen Molekulargewichts vergleichbare k-Werte.

Wegen ihres Gehalts an Invertierungsmittel und des hohen Molekulargewichts werden zur Charakterisierung des Molekulargewichts von inversen Emulsionspolymeren Lösungsviskositäten nach Brookfield bestimmt. Die inverse Polymeremulsion wird dafür gemäß Beispiel 1 invertiert. Die Viskositätsmessung erfolgt mit einem digitalen Brookfield-Viskosimeter mit geeigneter Spindel bei 50 rpm.

Die Beispiele 19 bis 36 in Tabelle 3 zeigen Ergebnisse von Vernetzungsversuchen bei 200 °C. Dabei wurden die Polymere jeweils 2 Stunden unter Rühren mit einem Korbrührer in Wasser aufgelöst. Zu der Polymerlösung wurde anschließend der Vernetzer gegeben und 30 min gerührt. Die homogene Lösung wurde in Bechergläsern in FANN HTHP-Alterungszellen gestellt. Die Alterungszellen wurden mit 1.700 bis 2.100 kPa Stickstoff beaufschlagt. Die auf diese Art gefüllten Alterungszellen werden 16 h im Ofen stehend getempert. Nach dem Abkühlen wird die Zelle entspannt und das Becherglas mit dem Polymergel entnommen und bewertet. Das Gel wird nach optischem Eindruck in die in der Industrie geläufigen Gelklassen (Tabelle 3) eingestuft und das Maß an Synerese (Schrumpfung, ausgelöst durch die thermische Vernetzung des Polymers) als Prozentanteil Syneresewasser, das während des Vernetzens aus dem Polymergel austritt, an dem Gesamtmenge Polymergel angegeben. Eine geringe Synerese ist als vorteilhaft anzusehen.

Beispiele 19 bis 30 illustrieren das Verhalten der Polymere A bis L bei 5 Gew.-% aktivem Polymergehalt und einem Prozent Chrom-(III)-Acetat als Vernetzer. Die Beispiele 31 bis 36 sind Vergleichsbeispiele, die das Verhalten der Polymere M bis R zeigen, welche nicht erfindungsgemäß sind.

**Tabelle 3: Vernetzung der Beispielpolymere bei 200°C**

| Beispiel | Polymer | Menge tq | Wasser | Vernetzer | Menge Vernetzer | 200 °C | |
|---|---|---|---|---|---|---|---|
| | | | | | | Gelqualität | Synerese |
| | | [g] | [g] | | [g] | A bis H* | [%] |
| 19 | A | 5 | 94 | Chrom-(III)-Acetat | 1 | H | 6 |
| 20 | B | 25 | 74 | Chrom-(III)-Acetat | 1 | H | 13 |
| 21 | C | 5 | 94 | Chrom-(III)-Acetat | 1 | H | 13 |
| 22 | D | 16 | 83 | Chrom-(III)-Acetat | 1 | H | 0 |
| 23 | E | 5 | 94 | Chrom-(III)-Acetat | 1 | H | 21 |
| 24 | F | 5 | 94 | Chrom-(III)-Acetat | 1 | H | 11 |
| 25 | G | 5 | 94 | Chrom-(III)-Acetat | 1 | G | 0 |
| 26 | H | 5 | 94 | Chrom-(III)-Acetat | 1 | G | 0 |
| 27 | 1 | 5 | 94 | Chrom-(III)-Acetat | 1 | H | 0 |
| 28 | J | 5 | 94 | Chrom-(III)-Acetat | 1 | G | 0 |
| 29 | K | 5 | 94 | Chrom-(III)-Acetat | 1 | H | 3 |
| 30 | L | 5 | 94 | Chrom-(III)-Acetat | 1 | H | 2 |
| 31 | M | 5 | 94 | Chrom-(III)-Acetat | 1 | H | 43 |
| 32 | N | 5 | 94 | Chrom-(III)-Acetat | 1 | F | n.a.** |
| 33 | O | 5 | 94 | Chrom-(III)-Acetat | 1 | F | n.a.** |
| 34 | P | 5 | 94 | Chrom-(III)-Acetat | 1 | F | n.a.** |
| 35 | Q | 5 | 94 | Chrom-(III)-Acetat | 1 | D | n.a.** |
| 36 | R | 5 | 94 | Chrom-(III)-Acetat | 1 | D | n.a.** |

| | | | | | | | |
|---|---|---|---|---|---|---|---|
| * siehe Tabelle 4, Gel-Typen ** Nicht auswertbar, da ein ungleichmäßiges Produkt vorlag, dessen flüssige und gelige Teile nicht trennbar waren | | | | | | | |

Tabelle 4 zeigt die in der Industrie geläufige Klassifikation des Geltyps, die zur Bewertung der Polymergele herangezogen wurde.

**Tabelle 4: Gel-Typen Klassifikation**

| Gel Typ | Bedeutung |
|---|---|
| A | niederviskose Flüssigkeit |
| B | erhöhte Viskosität |
| C | Viskoelastische Flüssigkeit (Blasen entweichen nur langsam, schwingen leicht elastisch) |
| D | weiches fließendes Gel |
| E | weiche "Vorhänge" |
| F | elastische Gelzungen |
| G | deformierbare Gele |
| H | festes brummendes Gel |

Die erfindungsgemäßen Polymere A bis L liefern in den Beispielen 19 bis 30 feste Gele des Typs G und H. Überraschenderweise zeigen Polymere mit einem Gesamtgehalt von 6 bis 15 Gew.-% an Struktureinheiten B und C gute Vernetzbarkeit, sie ergeben Gele des Typs G und H und zeigen wenig Synerese. Die Beispiele 19 bis 22 und 28 bis 30 verdeutlichen, dass prinzipiell alle verwendeten Polymerisationsmethoden feste Gele ergeben. Zur besseren Vergleichbarkeit wurden in Tabelle 3 und Tabelle 5 alle Polymere bei derselben Konzentration von 5 Gew.-% vermessen.

Die Beispiele 23 bis 27 illustrieren den Einfluss der chemischen Zusammensetzung auf die Vernetzungseigenschaften der Polymere. Beispiele 23 bis 26 Zeigen den Einfluss der eingesetzten Menge Vinylphosphonsäure auf die, bei sonst gleichen Bedingungen, entstehenden Polymergele. Eine wachsende Konzentration von Vinylphosphonsäure führt zu steigender Festigkeit des Polymergels. Andererseits tritt bei hohen VPS-Konzentrationen auch Synerese in geringem prozentualen Umfang auf. In Beispiel 27 formt das AMPS-reiche Polymer I ein im Vergleich zu Beispiel 24 etwas weicheres syneresefreies Gel des Typs H.

Die Vergleichsbeispiele 31 bis 36 zeigen bei einer Vernetzungs- und Alterungstemperatur von 200°C bereits deutliche Schwächen in Festigkeit oder Synerese. Polymere mit einem hohen Anteil AMPS zeigen bei 200 °C kaum Gelbildung. Ein über 5 Gew.-% gesteigerter Anteil VPS bzw. ein über 10 Gew.-% gesteigerter Anteil Acrylamid führten zu starker Synerese. Wird die Summe aus Komponente B und C geringer als 6 bis 15 Gew.-%, dann wird die Vernetzbarkeit des Polymers schlechter.

**Tabelle 5: Vernetzung der Beispielpolymere bei 232°C (450°F)**

| Beispiel | Polymer | Menge tq | Wasser | Vernetzer | Menge | 232 °C | |
|---|---|---|---|---|---|---|---|
| | | | | | | Gelqualität | Synerese |
| | | [g] | [g] | | [g] | A bis H* | [%] |
| 37 | A | 5 | 94 | Chrom-(III)-Acetat | 1 | H*** | 10 |
| 38 | B | 25 | 74 | Chrom-(III)-Acetat | 1 | H | 25 |
| 39 | C | 5 | 94 | Chrom-(III)-Acetat | 1 | H | 2 |
| 40 | D | 16 | 83 | Chrom-(III)-Acetat | 1 | G*** | 37 |
| 41 | E | 5 | 94 | Chrom-(III)-Acetat | 1 | G | 23 |
| 42 | F | 5 | 94 | Chrom-(III)-Acetat | 1 | H | 1 |
| 43 | G | 5 | 94 | Chrom-(III)-Acetat | 1 | G | 0 |
| 44 | H | 5 | 94 | Chrom-(III)-Acetat | 1 | G | 0 |
| 45 | I | 5 | 94 | Chrom-(III)-Acetat | 1 | H | 0 |
| 46 | J | 5 | 94 | Chrom-(III)-Acetat | 1 | G | 0 |
| 47 | K | 5 | 94 | Chrom-(III)-Acetat | 1 | G | 3 |
| 48 | L | 5 | 94 | Chrom-(III)-Acetat | 1 | G*** | 5 |
| 49 | M | 5 | 94 | Chrom-(III)-Acetat | 1 | geschrumpft | 61 |
| 50 | N | 5 | 94 | Chrom-(III)-Acetat | 1 | kollabiert | 67 |
| 51 | O | 5 | 94 | Chrom-(III)-Acetat | 1 | kollabiert | 65 |
| 52 | P | 5 | 94 | Chrom-(III)-Acetat | 1 | kollabiert | 65 |
| 53 | Q | 5 | 94 | Chrom-(III)-Acetat | 1 | Gelbrocken | n.a.** |
| 54 | R | 5 | 94 | Chrom-(III)-Acetat | 1 | Gelbrocken | n.a.** |

| | | | | | | | |
|---|---|---|---|---|---|---|---|
| * siehe Tabelle der Gel-Typen ** Nicht auswertbar, da ein ungleichmäßiges Produkt vorlag, dessen flüssige und gelige Teile nicht trennbar waren *** verfärbt | | | | | | | |

Die Beispiele 37 bis 48 zeigen auch bei 450 °F bzw. 232°C feste Gele und geringe Synerese. Bei einigen Varianten mit erhöhtem VPS-Gehalt wird bei den hohen Polymerkonzentrationen Synerese beobachtet. Jedoch werden durchweg Gele des Typs G und H erhalten.

Die Vergleichsbeispiele 49 bis 54 bilden bei 232°C keine Gele mehr. Ein über 10 Gew.-% steigender Acrylamidgehalt führt zu steigender Synerese des Polymers bei erhöhten Temperaturen.

**Tabelle 6: Geltyp in Abhängigkeit von der Konzentration des Polymers**

| Beispiel | Polymer | Menge tq | Wasser | Vernetzer | Menge | 200 °C | |
|---|---|---|---|---|---|---|---|
| | | | | | | Gelqualität | Synereste |
| | | [g] | [g] | | [g] | A bis H* | [%] |
| 74 | F | 4 | 95 | Chrom-(III)-Acetat | 1 | H | 0 |
| 75 | F | 2 | 97 | Chrom-(III)-Acetat | 1 | F | 0 |
| 76 | F | 1 | 98 | Chrom-(III)-Acetat | 1 | C | 0 |
| 77 | F | 0,5 | 98,5 | Chrom-(III)-Acetat | 1 | A | 0 |
| 78 | K | 2,5 | 96,5 | Chrom-(III)-Acetat | 1 | G | 0 |
| 79 | K | 1 | 98 | Chrom-(III)-Acetat | 1 | G | 0 |
| 80 | K | 0,5 | 98,5 | Chrom-(III)-Acetat | 1 | F | 0 |
| 81 | K | 0,25 | 98,75 | Chrom-(III)-Acetat | 1 | F | 0 |
| 82 | L | 8 | 91 | Chrom-(III)-Acetat | 1 | G | 0 |
| 83 | L | 4 | 95 | Chrom-(III)-Acetat | 1 | G | 0 |
| 84 | L | 2 | 97 | Chrom-(III)-Acetat | 1 | F | 0 |
| 85 | L | 1 | 98 | Chrom-(III)-Acetat | 1 | F | 0 |

| | | | | | | | |
|---|---|---|---|---|---|---|---|
| * siehe Tabelle der Gel-Typen ** Nicht auswertbar, da ein ungleichmäßiges Produkt vorlag, dessen flüssige und gelige Teile nicht trennbar waren *** verfärbt | | | | | | | |

Aus den Ergebnissen in Tabelle 6 ist zu erkennen, dass Polymere mit verschiedenen Molekulargewichten in Abhängigkeit von der Einsatzkonzentration für verschiedene Anwendungen geeignet sind. Das Polymer F ergibt in einer Polymerkonzentration von 4 Gew.-% eine rühr- und pumpbare Lösung. Diese führte nach der Vernetzung zu einem festen Polymergel des Typs H. In geringeren Konzentrationen, von zum Beispiel 0,5 und 1 Gew.-%, wurde eine geringe Viskosifizierung bzw. keine Gelbildung beobachtet. Die Polymere K und L zeigen bei Einsatzkonzentrationen von ca. 5 Gew.-% bezogen auf das aktive Polymer hochviskose Lösungen und bilden ebenso feste Gele des Typs H. Aufgrund des hohen Molekulargewichts jedoch sind sie in der Lage auch bei geringeren Einsatzkonzentrationen, wie z. B. 0,25 bis 0,5 Gew.-% weiche, hochelastische Gele zu bilden.

## Patentansprüche

1. Bei Temperaturen von über 150°C mit mehrwertigen Metallionen reversibel vernetzbare Copolymere, enthaltend
i) 80 - 90 Gew.-% einer oder mehrerer Struktureinheiten der Formel A 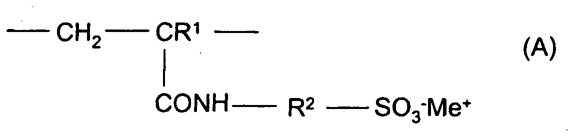 worin
R¹ Wasserstoff oder Methyl,
R² C₂-C₁₀-Alkylen, und
Me⁺ ein Ammonium- oder ein Alkalimetallion bedeuten,
ii) 1 bis 10 Gew.-% einer oder mehrerer Struktureinheiten der Formel B 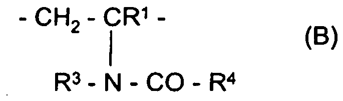 worin R³ und R⁴ unabhängig voneinander Wasserstoff, Methyl oder Ethyl bedeuten,
iii) 1 bis 10 Gew.-% einer oder mehrerer Struktureinheiten der Formel C, 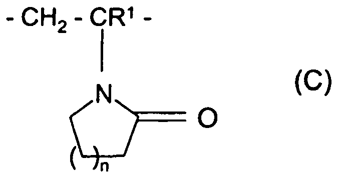 worin n eine Zahl zwischen 1 und 6 ist
iv) 0,1 bis 5 Gew.-% Struktureinheiten der Formel D 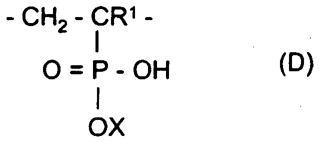 worin X Wasserstoff, ein Ammonium- oder ein Alkalimetallion bedeutet, und gegebenenfalls
v) 0 bis 10 Gew.-% einer oder mehrerer Struktureinheiten der Formel E 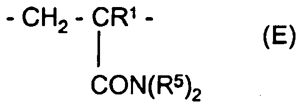 worin R⁵ für Wasserstoff, Methyl und/oder Ethyl steht,
mit der Maßgabe, dass der Gehalt der Copolymere an Struktureinheiten B) und C) zwischen 6 und 15 Gew.-% liegt.

2. Copolymere nach Anspruch 1, enthaltend 82 bis 88 Gew.-% der Struktureinheiten der Formel (A).

3. Copolymere nach Anspruch 1 und/oder 2, enthaltend 2 bis 8 Gew.-% der Struktureinheiten der Formel (B).

4. Copolymere nach einem oder mehreren der Ansprüche 1 bis 3, enthaltend 2 bis 8 Gew.-% der Struktureinheiten der Formel (C).

5. Copolymere nach einem oder mehreren der Ansprüche 1 bis 4, enthaltend 0,5 bis 3 Gew.-% der Struktureinheiten der Formel (D).

6. Copolymere nach einem oder mehreren der Ansprüche 1 bis 5, enthaltend 0,1 bis 8 Gew.-% der Struktureinheiten der Formel (E).

7. Copolymere nach einem oder mehreren der Ansprüche 1 bis 6, worin R² eine C₄-Alkylengruppe ist.

8. Copolymere nach einem oder mehreren der Ansprüche 1 bis 7, worin R³ und R⁴ gleichzeitig Wasserstoff bedeuten.

9. Copolymere nach einem oder mehreren der Ansprüche 1 bis 8, worin der Gesamtgehalt an Struktureinheiten der Formel (B) und (C) zwischen 7,5 und 12,5 Gew.-% liegt.

10. Copolymere nach einem oder mehreren der Ansprüche 1 bis 9, worin das Gewichtsverhältnis der Struktureinheiten der Formeln (B) zu (C) kleiner als 3:1 ist.

11. Copolymere nach einem oder mehreren der Ansprüche 1 bis 10, worin X für Wasserstoff steht.

12. Copolymere nach einem oder mehreren der Ansprüche 1 bis 11, worin R⁵ für Wasserstoff steht.

13. Copolymere nach einem oder mehreren der Ansprüche 1 bis 12, worin sich die Anteile der Struktureinheiten (A), (B), (C) und (D) zu 100 Gew.-% addieren.

14. Copolymere nach einem oder mehreren der Ansprüche 1 bis 13, worin sich die Anteile der Struktureinheiten (A), (B), (C), (D) und (E) zu 100 Gew.-% addieren.

15. Copolymere nach einem oder mehreren der Ansprüche 1 bis 14, welche Molekulargewichte zwischen 50.000 und 2·10⁷ g/mol aufweisen.

16. Zusammensetzung, umfassend ein Copolymer gemäß einem oder mehreren der Ansprüche 1 bis 15 und einen Vernetzer, der eine Verbindung eines mehrwertigen Metallions umfasst.

17. Zusammensetzung nach Anspruch 16, worin das Metallion ein Ion von Zirkonium, Chrom, Titan und/oder Aluminium ist.

18. Verfahren zur Veränderung der Permeabilität einer unterirdischen Formation für Wasser bzw. saline Wässer, bei welchem man gleichzeitig mit der wässrigen Lösung des Copolymers, welches Struktureinheiten A), B), C), D) und gegebenenfalls E) wie oben definiert enthält, oder danach, in die Formation bzw. Lagerstätte bei Temperaturen oberhalb 200°C einen Vernetzer für das Copolymer einbringt, der wenigstens eine mehrwertige Erdalkali- und/oder Übergangsmetallverbindung umfasst, und anschließend die Bohrung zur Gewinnung von Erdöl und/oder Erdgas in Betrieb nimmt.

19. Verwendung eines Copolymers, welches Struktureinheiten A), B), C), D) und gegebenenfalls E) wie oben definiert enthält, und eines Vernetzers für das Copolymer, der wenigstens eine mehrwertige Erdalkali- und/oder Übergangsmetallverbindung umfasst, zur Veränderung der Permeabilität einer unterirdischen Formation für Wasser bzw. saline Wässer, bei Temperaturen oberhalb 200°C.

## Claims

1. A copolymer which is reversibly crosslinkable with polyvalent metal ions at temperatures of above 150°C and contains
i) 80 - 90% by weight of one or more structural units of the formula A 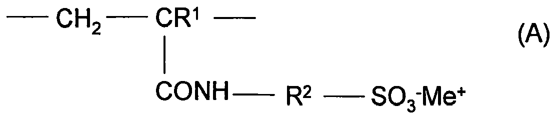 where
R¹ is hydrogen or methyl,
R² is C₂-C₁₀-alkylene, and
Me⁺ is an ammonium or an alkali metal ion,
ii) from 1 to 10% by weight of one or more structural units of the formula B 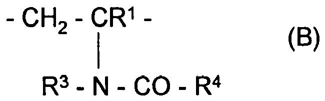 where R³ and R⁴ are each independently hydrogen, methyl or ethyl,
iii) from 1 to 10% by weight of one or more structural units of the formula C, 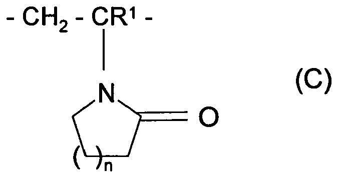 where n is a number from 1 to 6
iv) from 0.1 to 5% by weight of structural units of the formula D 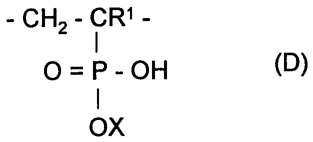 where X is hydrogen, an ammonium ion or an alkali metal ion, and optionally
v) from 0 to 10% by weight of one or more structural units of the formula E 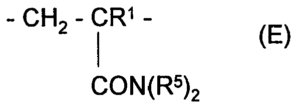 where R⁵ is hydrogen, methyl and/or ethyl,
with the proviso that the content in the copolymers of structural units B) and C) is from 6 to 15% by weight.

2. A copolymer as claimed in claim 1, containing from 82 to 88% by weight of the structural units of the formula (A).

3. A copolymer as claimed in claim 1 and/or 2, containing from 2 to 8% by weight of the structural units of the formula (B).

4. A copolymer as claimed in one or more of claims 1 to 3, containing from 2 to 8% by weight of the structural units of the formula (C).

5. A copolymer as claimed in one or more of claims 1 to 4, containing from 0.5 to 3% by weight of the structural units of the formula (D).

6. A copolymer as claimed in one or more of claims 1 to 5, containing from 0.1 to 8% by weight of the structural units of the formula (E).

7. A copolymer as claimed in one or more of claims 1 to 6, in which R² is a C₄-alkylene group.

8. A copolymer as claimed in one or more of claims 1 to 7, in which R³ and R⁴ are simultaneously hydrogen.

9. A copolymer as claimed in one or more of claims 1 to 8, in which the total content of structural units of the formula (B) and (C) is from 7.5 to 12.5% by weight.

10. A copolymer as claimed in one or more of claims 1 to 9, in which the weight ratio of the structural units of the formula (B) to (C) is less than 3:1.

11. A copolymer as claimed in one or more of claims 1 to 10, in which X is hydrogen.

12. A copolymer as claimed in one or more of claims 1 to 11, in which R⁵ is hydrogen.

13. A copolymer as claimed in one or more of claims 1 to 12, in which the proportions of the structural units (A), (B), (C) and (D) add up to 100% by weight.

14. A copolymer as claimed in one or more of claims 1 to 13, in which the proportions of the structural units (A), (B), (C), (D) and (E) add up to 100% by weight.

15. A copolymer as claimed in one or more of claims 1 to 14, which has molecular weights between 50 000 and 2·10⁷ g/mol.

16. A composition comprising a copolymer as claimed in one or more of claims 1 to 15 and a crosslinker which comprises a compound of a polyvalent metal ion.

17. A composition as claimed in claim 16, wherein the metal ion is an ion of zirconium, chromium, titanium and/or aluminum.

18. A process for altering the permeability of an underground formation for water or saline water, in which a crosslinker for the copolymer which comprises at least one polyvalent alkaline earth metal and/or transition metal compound is introduced simultaneously with the aqueous solution of the copolymer which contains structural units A), B), C), D) and optionally E) as defined above, or thereafter, into the formation or deposit at temperatures above 200°C, and subsequently taking the borehole for the extraction of mineral oil and/or natural gas into production.

19. The use of a copolymer which contains structural units A), B), C), D) and optionally E) as defined above, and a crosslinker for the copolymer, said crosslinker comprising at least one polyvalent alkaline earth metal and/or transition metal compound to alter the permeability of an underground formation for water or saline water at temperatures above 200°C.

## Revendications

1. Copolymères réticulables de manière réversible à des températures supérieures à 150°C par des ions métalliques polyvalents, contenant
i) 80-90% en poids d'une ou de plusieurs unités structurelles de formule A 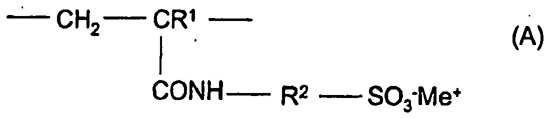 où
R¹ signifie hydrogène ou méthyle,
R² signifie C₂-C₁₀-alkylène, et
Me+ signifie un ion d'ammonium ou de métal alcalin,
ii) 1 à 10% en poids d'une ou de plusieurs unités structurelles de formule B 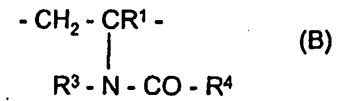 R³ et R⁴ signifiant, indépendamment l'un de l'autre hydrogène, méthyle ou éthyle,
iii) 1 à 10% en poids d'une ou de plusieurs unités structurelles de formule C, 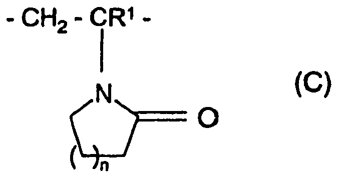 n valant un nombre entre 1 et 6,
iv) 0,1 à 5% en poids d'unités structurelles de formule D 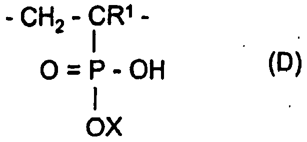 X signifiant hydrogène, un ion d'ammonium ou de métal alcalin, et le cas échéant
v) 0 à 10% en poids d'une ou de plusieurs unités structurelles de formule E 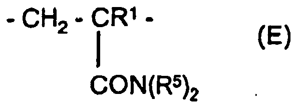 R⁵ représentant hydrogène, méthyle et/ou éthyle,
à condition que la teneur des copolymères en unités structurelles B) et C) soit située entre 6 et 15% en poids.

2. Copolymères selon la revendication 1, contenant 82 à 88% en poids des unités structurelles de formule (A).

3. Copolymères selon la revendication 1 et/ou 2, contenant 2 à 8% en poids des unités structurelles de formule (B).

4. Copolymères selon l'une ou plusieurs des revendications 1 à 3, contenant 2 à 8% en poids des unités structurelles de formule (C).

5. Copolymères selon l'une ou plusieurs des revendications 1 à 4, contenant 0,5 à 3% en poids des unités structurelles de formule (D).

6. Copolymères selon l'une ou plusieurs des revendications 1 à 5, contenant 0,1 à 8% en poids des unités structurelles de formule (E).

7. Copolymères selon l'une ou plusieurs des revendications 1 à 6, R² représentant un groupe C₄-alkylène.

8. Copolymères selon l'une ou plusieurs des revendications 1 à 7, R³ et R⁴ signifiant simultanément hydrogène.

9. Copolymères selon l'une ou plusieurs des revendications 1 à 8, la teneur totale en unités structurelles de formule (B) et (C) se situant entre 7,5 et 12,5% en poids.

10. Copolymères selon l'une ou plusieurs des revendications 1 à 9, la proportion pondérale des unités structurelles des formules (B) à (C) étant inférieure à 3:1.

11. Copolymères selon l'une ou plusieurs des revendications 1 à 10, X représentant hydrogène.

12. Copolymères selon l'une ou plusieurs des revendications 1 à 11, R⁵ représentant hydrogène.

13. Copolymères selon l'une ou plusieurs des revendications 1 à 12, la somme des proportions des unités structurelles (A), (B), (C) et (D) valant 100% en poids.

14. Copolymères selon l'une ou plusieurs des revendications 1 à 13, la somme des proportions des unités structurelles (A), (B), (C), (D) et (E) valant 100% en poids.

15. Copolymères selon l'une ou plusieurs des revendications 1 à 14, qui présentent des poids moléculaires entre 50 000 et 2·10⁷ g/mole.

16. Composition, comprenant un copolymère selon l'une ou plusieurs des revendications 1 à 15 et un réticulant, qui comprend un composé d'un ion métallique polyvalent.

17. Composition selon la revendication 16, l'ion métallique étant un ion de zirconium, de chrome, de titane et/ou d'aluminium.

18. Procédé pour la modification de la perméabilité d'une formation sous-terraine pour l'eau ou l'eau salée, dans laquelle on introduit simultanément avec la solution aqueuse du copolymère, qui contient des unités structurelles A), B), C), D) et le cas échéant E) telles que définies ci-dessus, ou après, dans la formation ou, selon le cas, le gisement à des températures supérieures à 200°C un réticulant pour le copolymère, qui comprend au moins un composé polyvalent de métal alcalino-terreux et/ou de transition, puis on met en exploitation le trou pour l'extraction de pétrole et/ou de gaz naturel.

19. Utilisation d'un copolymère, qui contient des unités structurelles A), B), C), D) et le cas échéant E) telles que définies ci-dessus et d'un réticulant pour le copolymère, qui comprend au moins un composé polyvalent de métal alcalino-terreux et/ou de transition, pour la modification de la perméabilité d'une formation sous-terraine pour l'eau ou, selon le cas, l'eau salée à des températures supérieures à 200°C.
